# EUROPÄISCHE PATENTSCHRIFT

(11) **EP 0 790 851 B1**
(45) Veröffentlichungstag und Bekanntmachung des Hinweises auf die Patenterteilung: **08.03.2000**
(21) Anmeldenummer: 94931718.4
(22) Anmeldetag: 09.11.1994
(51) Int. Cl.: B01D 21/00, C02F 1/20, C02F 3/22, C02F 11/00, C02F 3/12

(54) **VERFAHREN UND VORRICHTUNG ZUR BELEBTSCHLAMMENTGASUNG**
ACTIVATED SLUDGE DEGASSING PROCESS AND DEVICE
PROCEDE ET DISPOSITIF DE DEGAZAGE DE BOUES ACTIVEES

(43) Veröffentlichungstag der Anmeldung: 27.08.1997
(73) Patentinhaber: GOLCZ, Andrzej, 82-300 Elblag (PL)
(72) Erfinder: GOLCZ, Andrzej, 82-300 Elblag (PL)
(74) Vertreter: Grünecker, Kinkeldey, Stockmair & Schwanhäusser Anwaltssozietät
(86) Internationale Anmeldenummer: PL9400019
(87) Internationale Veröffentlichungsnummer: WO9614912

(56) Entgegenhaltungen:
- EP-A- 0 003 548
- GB-A- 2 013 095
- GB-A- 2 016 947
- US-A- 4 276 165
- US-A- 4 512 784
- PATENT ABSTRACTS OF JAPAN vol. 013 no. 399 (C-632) ,5.September 1989 & JP,A,01 142016 (HITACHI CABLE LTD;OTHERS: 01) 2.Juni 1989,

## Beschreibung

Gegenstand der Erfindung ist ein Verfahren zur Abwasserreinigung, besonders zur kontinuierlichen Reinigung, sowie ein System der Abwasserreinigungsanlage, besonders für die kontinuierliche Reinigung der Abwässer.

Bei den bekannten Verfahren der Abwasserreinigung, die auf der Ausnutzung des belebten Schlammes beruht, wird die Mischung dieses belebten Schlammes in Schwebe in den gereinigten Abwässern gehalten und belüftet und nach dem Austritt aus den Belüftungsbehältern zum Sekundärabsetzbecken geleitet, wo das Absetzen der Sedimente durch Abscheidung erfolgt.
Die abgeschiedenen Sedimente werden wiederholt im Reinigungsprozess ausgenutzt und die dekantierte Flüssigkeit wird als gereinigte Abwässer zum Abnehmer geleitet. Die in den Reinigungsprozess zurückgeführten rezirkulierenden belebten Sedimente behalten ihre Reinigungseigenschaften, zugeführt kontinuierlich der partienweise als neue Mengen von zur Reinigung bestimmter Rohabwässer.

Derartige Reinigungsprozessen, realisiert besonders bei Belüftungsräumen, ausgeführt als tiefe Behälter, beispielsweise über 5 Meter, besitzen erhebliche Nachteile in der praktischen Anwendung. Dieses folgt daraus, daß sich der belebte Schlamm durch eine verhältnismässig schwache Sedimentationsfähigkeit und/oder eine ungünstige Flotationseigenschaft des Einflusses der Sedimentflocken auf die Oberfläche charakterisiert, was die Führung des Sedimentationsprozesses im Sekundärklärbecken wesentlich erschwert und im Falle sehr tiefer Behälter oder der Kaskadenprozesse ganz unmöglich macht.

Zur Beseitigung dieser Erscheinung ist die Anwendung in den Reinigungsprozessen der Abwässer einer zusätzlichen Arbeitsstufe bekannt, beruhend auf der flockierenden Mischung der belüfteten Abwässer vor dem Zulauf zum Absetzbecken, was zur Folge hat, daß der Reinigungsprozess unnötig lang wird und oft unregelmässig verläuft.

EP-A-0 003 548 offenbart eine Vorrichtung zum biologischen Reinigen von Abwasser, in der typische Fallfilmstrecken, Kaskaden oder mechanische Entgaser zum Entgasen des Schlamm-Wasser-Gemisches verwendet wurden. In dieser Vorrichtung erfolgt während des Entgasungsprozesses die Beseitigung nur derjenigen Luftblasen aus der zu entgasenden Mischung, die mit den Schlammflocken naturgemäß lose verbunden sind; die Effektivität des Reinigungsprozesses ist also unzufriedenstellend.

Die Grundlage der Erfindung bildet die Feststellung, daß die Flocken des belebten Schlammes während der Realisierung der bekannten Reinigungsprozesse unerwünschte Eigenschaften besitzen, im Ergebnis welcher diese Prozesse eine begrenzte Effektivität und Leisung aufweisen.

Im Ergebnis dieser Feststellung wurden erfindungsgemäße Arbeitsstufen und technische Mittel angewandt, welche es bewirken, daß die Flocken zu Rücksedimenten werden, indem sie in dem Rezirkulationsprozess die Funktion des belebten Schlammes erfüllen, mit neuen Eigenschaften, die eine bedeutende Steigerung der Effektivität und Leisung der Abwasserreinigung erlauben.

Das Verfahren zur Abwasserreinigung, insbesondere zur kontinuierlichen Reinigung, beruhend auf der Mischung der Abwässer mit dem belebten Schlamm und der Belüftung dieser Mischung im Behälter und anschließend der Abführung der belüfteten Mischung zum Sekundärklarbecken, unter Anwendung der Entgasung, sowie auf der wirderholten Ausnutzung der im Sekundärbecken angesammelten Rücksedimente im Belüftungsprozess der Abwässer, charakterisiert sich erfindungsgemäß dadurch, daß die belüftete Mischung der Abwässer mit dem belebten Schlamm, vor der Abführung in das Sekundärbecken, einer Unterdruck-Entgasung unterzogen wird, wobei unmittelbar vor der genannten Unterdruck-Entgasung diese Mischung in eine turbulente Strömung, vorteilhaft durch eine Zuführung zu ihr einer zusätzlichen Luftmenge, gebracht wird.

Das System einer Abwasserreinigungsanlage, insbesondere für eine kontinuierliche Abwasserreinigung, enthält im wesentlichen einen beliebigen Belüftungsbehälter der Mischung der Abwässer und des belebten Schlammes, insbesondere ein Kaskadenbehälter, verbunden in einer Richtung und rezirkulativ mit dem Sekundärbecken über eine Rohrleitung in Form eines umgekehrten U, dessen ein Arm das Zuführungssammelrohr bildet und der zweite Arm das Abführungssammelrohr ist. Das Wesen des Systems bildet dessen Ausrüstung mit Elementen zur Unterdruck-Entgasung in Form von Zwischenkammer mit dem darin ausgeschiedenen Raum der Gasabsaugung, die wenigstens im Teil eine die oberen Enden beider Sammelrohre verbindende Strecke ist, die die Verbindung des Belüftungsbeckens oder dessen ausgeschiedenen Kammer mit dem Sekundärbecken oder dessen ausgeschiedenen Kammer bilden, und ferner Mittel aufweist, die die turbulente Bewegung der Mischung und Abwässer und des zur Zwischenkammer zulaufenden belebten Schlammes hervorrufen, wobei diese Mittel zum Erzeugen einer turbulenten Strömung zwischen Beluftungsbehälter und Unterdruck-Entgasung angeordnet sind.

Der Raum der Gasabsaugung ist mit der Quelle des Unterdrukkes, vorteilhaft mit der Saugpumpe, verbunden.

Die unteren Enden des Zuführungssammelrohres und des Abführungssammelrohres sind eingetaucht in oder entsprechend mit dem Beüftungsbehälter der Mischung des belebten Schlammes und dem Sekundärbecken oder mit der abgeschiedenen Kammer des Behälters und der abgeschiedenen Kammer des Sekundärklärbeckens verbunden.

Die die turbulente Bewegung hervorrufenden Mittel bildet eine Öffnung im Zuführungssammelrohr, die über dem Spiegel der belüfteten Abwässer angeordnet ist, die den Becken der zu reinigenden Abwässer oder die darin ausgeschiedene Kammer füllen.

Vorteilhaft ist im Zuführungssammelrohr eine Saug-Preß-Pumpe oder alternativ im Abführungssammelrohr eine Saug-Preß-Pumpe angeordnet.

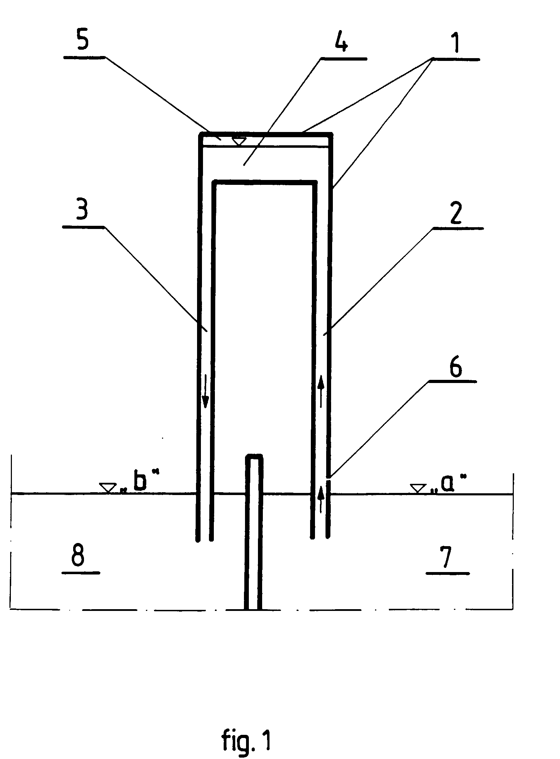

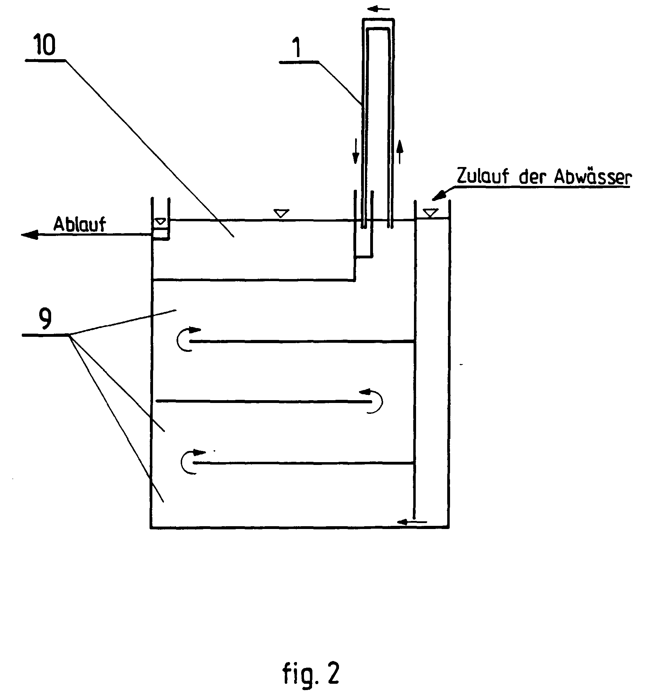

Der Gegenstand der Erfindung wird eingehend anhand eines Beispiels der Ausführung, dargestellt auf der beigelegten Zeichnung, beschrieben, auf welcher Fig. 1 die Anlage der Abwasserreinigung in fragmentarischer schematischer Sicht darstellt und Fig. 2 dieselbe Anlage mit Anwendung im System der Abwasserreinigung des Kaskadenbehälters zeigt.

Die Entlüftungsvorrichtung 1 bildet im Prinzip ein Rohr in Form eines umgekehrten Buchstabens U, dessen ein Arm das Zuführungssammelrohr 2 ist, wogegen der zweite Arm das Abführungssammelrohr 3 ist; der Abschnitt dagegen, ihre oberen Enden verbindend, begrenzt die Zwischenkammer 4 mit dem in ihr abgeschiedenem Raum 5 der Gasabsaugung. Die unteren Enden des Zuführungssammelrohres 2 und des Abführungssammelrohres 3 sind eingetaucht oder entsprechend mit dem Belüftungsbehälter der Mischung des belebten Schlammes und dem Sekundärklärbecken verbunden, oder sind mit der abgeschiedenen Kammer 7 des Behälters und der abgeschiedenen Kammer 8 des Sekundärklärbeckens verbunden, wie auf Fig.1 dargestellt ist.

Das Zuführungssammelrohr 2 besitzt die Öffnung 6, die sich über dem Spiegel "a" der belüfteten Abwässer befindet und den Behälter der gereinigten Abwässer oder die in ihm abgeschiedene Kammer 7 füllt.

Der Raum 5 der Absaugung der Gase ist mit der Unterdruckquelle verbunden, beispielsweise eine auf der Zeichnung nicht dargestellte Saugpumpe.

Auf Fig. 2 ist die Entlüftungsvorrichtung 1 dargestellt, die sich zwischen der letzten, am höchsten gelegenen Kammer 9 des Kaskadensystems der Belüftung der Mischung des belebten Schlammes in den gereinigten Abwässern und dem Sekundärklärbecken 10 befindet.

In der beschriebenen Entlüftungsanlage 1 erfolgt die Bewegung und die Strömung, welche turbulent ist, der vorher belüfteten Mischung der Abwässer und des aktiven Schlammes unter Zwang im Ergebnis der Ansaugung einer zusätzlichen Menge von Luft über die Öffnung 6, die sich über dem Spiegel der Flüssigkeit füllend die Kammer 7 des Belüftungsbehälters befindet. In diesem Falle wird zur Hervorrufung dieser Strömung der Effekt der Mammutpumpe ausgenutzt. Die zusätzlich zugeführte Luftmenge, bewirkend die erwünschte Senkung des spezifischen Gewichtes der Mischung, wird später zussammen mit den Gasen enthalten in dieser Mischung abgesaugt.

### Beispiel

In einer typischen städtischen Abwasserreinigungsanlage, ausgerüstet in einem Behälter der Mischung der Abwässer und des belebten Schlammes, erfolgte eine effektive Reinigung der zugeführten Abwässer in einer Menge von 100 m³/Stunde und mit einer Verunreinigungenladung 30 kg 0₂/Stunde. Nach einer Installierung der erfindingsgemäßen Entlüftungsvorrichtung stieg die Sedimentationsfähigkeit des belebten Schlammes bedeutend an und aufgrund dessen entsteht die Möglichkeit der Vergrösserung der Sedimentmenge im System der Reinigunsanlage und im Endresultat das Erreichen der Fähigkeit einer effektiven Reinigung der Abwässer höher um wenigstens 50% ohne die Notwendigkeit der Anwendung zusätzlicher Belüftungsbehälter.

Das Erreichen dieses Ergebnisses ist dadurch möglich, weil im Ergebnis der Entlüftung der vorher belüfteten Mischung der Abwässer und des aktiven Schlammes, in Unterdruckbedingungen, erzeugt von der Entlüftungsvorrichtung laut Erfindung, die Flocken des belebten Schlammes, umgebend die in ihnen enthaltenen Mikroblasen des Gases, von diesem Gas befreit werden, welcher in den erwähnten Unterdruckbedingungen einer mehrmaligen Vergrösserung unterliegt und in Ergebnis dessen erfolgt eine Abscheidung dieser Mikroblasen vom Flocken, verbunden mit einer fast völligen Zerstörung seiner Flockenstruktur. Später, zusammen mit der weiteren Strömung in der Entlüftungsvorrichtung, in Bedingungen des sich kontinuierlich verringernden Unterdruckes, erfolgt eine schnelle wiederholte Verbindung untereinander der einzelnen Sedimentflocken, welche nach dem Arbeitsschritt der Entlüftung ein bedeutend grösseres spezifisches Gewicht und im Effekt eine bedeutend erhöhte Fähigkeit zur Sedimentation besitzen.

Dadurch entsteht die Möglichkeit der Führung des Reinigungsprozesses bei Gehalt im belebten Schlamm bedeutender und für den Verlauf des Prozesses vorteilhafterer Mengen von Fadenmikroorganismen ohne Antastung der Sedimentationsfähigkeit der Sedimente, was bei Anwendung üblicher Prozesse unmöglich zu erreichen war.

Die in der das Sekundärklärbecken füllenden Mischung schwebenden Flocken des belebten Schlammes, erzeugen nach ihrer Entgasung, im Ergebnis von Flocken-Innenprozessen, das Gas, welches jedoch nicht in Mikroblasen in den Sedimentflocken gebunden wird, sondern in der Mischung, welche vorher entgast wurde, aufgelöst wird.

Es wurde festgestellt, daß der einer Unterdruckentgasung unterzogene belebte Schlamm, welcher sich im Sekundärklärbecken ansammelt und nachher zurück in den Belüftungsprozess geleitet wird, sich als Rücksediment durch eine erhöhte Fähigkeit der Aufnahme von Verunreinigungen, enthalten in den zur Reinigung zugeführten Abwässern, charakterisiert, beschleunigend bedeutend den Prozess ihrer Reinigung, darin auch die Bindung von Phosphorverunreinigungen.

Es wurde auch festgestellt, daß dieses Sediment auf eine plötzliche Belastung mit einer Ladung von Verunreinigungen bedeutend beständiger ist.

## Patentansprüche

1. Verfahren zur Abwasserreinigung, insbesondere zur kontinuierlichen Reinigung, beruhend auf der Mischung der Abwasser mit dem belebten Schlamm und der Belüftung dieser Mischung im Behälter und später der Abführung der belüfteten Mischung zum Sekundärklärbecken (10), unter Anwendung der Entgasung, sowie auf der wiederholten Ausnutzung der im Sekundärklärbecken angesammelten Rücksedimente im Belüftungsprozeß der Abwasser, dadurch gekennzeichnet, daß die belüftete Mischung der Abwässer mit dem belebten Schlamm, vor der Abführung in das Sekundärklärbecken, einer Unterdruck-Entgasung, unterzogen wird, wobei unmittelbar vor der genannten Unterdruck-Entgasung diese Mischung in eine turbulente Strömung, vorteilhaft durch eine Zuführung zu ihr einer zusätzlichen Luftmenge, gebracht wird.

2. System einer Abwasserreinigungsanlage, insbesondere für eine kontinuierliche Abwasserreinigung, enthaltend im wesentlichen einen beliebigen Belüftungsbehälter der Mischung der Abwässer und des belebten Schlammes, insbesondere einen Kaskadenbehälter, verbunden in einer Richtung und rezirkulativ mit dem Sekundärbecken über eine Rohrleitung in Form eines umgekehrten U, dessen ein Arm das Zuführungssammelrohr bildet und dessen zweiter Arm das Abführungssammelrohr ist, dadurch gekennzeichnet, daß es Elemente zur Unterdruck-Entgasung (1) in Form der Zwischenkammer (4) mit dem darin abgeschiedenen Raum (5) der Gasabsaugung aufweist, die wenigstens im Teil eine die oberen Enden beider Sammelrohre (2 und 3) verbindende Strecke ist, die die Verbindung des Belüftungsbeckens oder dessen abgeschiedener Kammer (7) mit dem Sekundärklärbecken (10) oder dessen abgeschiedener Kammer (8) bilden, und ferner Mittel (6) aufweist, die die turbulente Bewegung der Mischung der Abwässer und des zur Zwischenkammer (4) zulaufenden belebten Schlammes hervorrufen, wobei diese Mittel (6) zum Erzeugen einer turbulenten Strömung zwischen Belüftungsbehälter und Unterdruck-Entgasung angeordnet sind.

3. System nach Anspruch 2, dadurch gekennzeichnet, daß der Raum (5) der Gasabsaugung mit der Quelle des Unterdruckes, vorteilhaft einer Saugpumpe, verbunden ist.

4. System nach Anspruch 2, dadurch gekennzeichnet, daß die unteren Enden des Zuführungssammelrohres (2) und des Abführungssammelrohres (3) eingetaucht sind in oder entsprechend mit dem Belüftungsbehälter der Mischung des belebten Schlammes und dem Sekundärklärbecken oder mit der abgeschiedenen Kammer (7) des Behälters und der abgeschiedenen Kammer (8) des Sekundärklärbekkens verbunden sind.

5. System nach Anspruch 2 oder 4, dadurch gekennzeichnet, daß die die turbulente Bewegung hervorrufenden Mittel eine Öffnung (6) im Zuführungssammelrohr (2) bildet, die über dem Spiegel (a) der belüfteten Abwässer angeordnet ist, die den Becken der zu reinigenden Abwässer oder die darin ausgeschiedene Kammer (7) füllen.

6. System nach Anspruch 2 oder 4, dadurch gekennzeichnet, daß im Zuführungssammelrohr (2) eine Saug-Preß-Pumpe angeordnet ist.

7. System nach Anspruch 2 oder 4, dadurch gekennzeichnet, daß im Abführungssammelrohr (3) eine Saug-Preß-Pumpe angeodnet ist.

## Claims

1. Process for the purification of waste water, in particular for continuous purification, based on mixing the waste waters with activated sludge and aerating this mixture in a tank and later carrying off the aerated mixture to the secondary settling tank (10), using degassing, and on repeated utilization of the return sediments collected in the secondary settling tank in the aeration process on the waste waters, characterized in that the aerated mixture of waste waters with activated sludge is subjected to a reduced-pressure degassing before being carried off into the secondary settling tank, this mixture being brought into turbulent flow, advantageously by feeding into it an additional amount of air, before the said reduced-pressure degassing.

2. System of a waste water purification plant, in particular for continuous purification of waste water, substantially comprising any desired aerating tank for the mixture of waste waters and activated sludge, in particular a cascade tank, connected in one direction and in recirculation with the secondary tank via a pipeline in the form of an inverted U, one arm of which forms the feed collecting pipe and the second arm of which is the carry-off collecting pipe, characterized in that it has elements for reduced-pressure degassing (1) in the form of the intermediate chamber (4) with the space (5), separated off therein, of the gas exhaust, which is at least in part a zone connecting the upper ends of the two collecting pipes (2 and 3), which form the connection of the aerating tank or its separated-off chamber (7) with the secondary settling tank (10) or its separated-off chamber (8), and furthermore has means (6) which cause turbulent movement of the mixture of waste waters and of the activated sludge running into the intermediate chamber (4), these means (6) being arranged to generate a turbulent flow between the aerating tank and reduced-pressure degassing.

3. System according to claim 2, characterized in that the space (5) of the gas exhaust is connected to the source of the reduced pressure, advantageously a suction pump.

4. System according to claim 2, characterized in that the lower ends of the feed collecting pipe (2) and the carry-off collecting pipe (3) are immersed in or correspondingly connected with the aerating tank of the mixture of activated sludge and the secondary settling tank or with the separated-off chamber (7) of the tank and the separated-off chamber (8) of the secondary settling tank.

5. System according to claim 2 or 4, characterized in that the means which cause the turbulent movement forms an opening (6) in the feed collecting pipe (2) which is arranged above the level (a) of the aerated waste waters which fill the tank of waste waters to be purified or the chamber (7) separated off therein.

6. System according to claim 2 or 4, characterized in that a suction-pressure pump is arranged in the feed collecting pipe (2).

7. System according to claim 2 or 4, characterized in that a suction-pressure pump is arranged in the carry-off collecting pipe (3).

## Revendications

1. Procédé pour l'épuration d'eaux usées, en particulier pour une épuration continue, reposant sur un mélange des eaux usées avec des boues activées et sur une ventilation de ce mélange dans un conteneur et ultérieurement sur une évacuation du mélange aéré vers un bassin de décantation secondaire (10) en utilisant un dégazage, ainsi que sur l'utilisation répétée de sédiments récupérés amassés dans le bassin de décantation secondaire dans le processus d'aération des eaux usées, caractérisé en ce que le mélange aéré des eaux usées avec les boues activées est soumis à un dégazage sous vide avant son évacuation dans le bassin de décantation secondaire, ce mélange étant, immédiatement avant le dégazage sous vide mentionné, introduit dans un courant turbulent, et ceci de manière avantageuse par une adjonction à ce mélange d'une quantité d'air supplémentaire.

2. Système d'une installation d'épuration d'eaux usées, en particulier pour une épuration continue des eaux usées, comprenant pour l'essentiel un quelconque conteneur d'aération du mélange des eaux usées et de boues activées, en particulier un bassin en cascade relié dans une direction et en recirculation avec le bassin secondaire par un tube en forme de U renversé dont le premier bras constitue le tube collecteur d'alimentation et dont le deuxième bras constitue le tube collecteur d'évacuation, caractérisé en ce qu'il comporte des éléments pour le dégazage sous vide (1) sous forme de la chambre intermédiaire (4) avec son espace séparé (5) d'aspiration des gaz constituant au moins en partie un trajet reliant les parties supérieures des deux tubes collecteurs (2 et 3) et réalisant la liaison entre le bassin d'aération ou son espace séparé (7) et le bassin de décantation secondaire (10) ou son espace séparé (8) et qu'il comporte en outre des moyens (6) qui provoquent le mouvement turbulent du mélange des eaux usées et des boues activées s'écoulant vers la chambre intermédiaire (4), ces moyens (6) pour générer un courant turbulent étant disposés entre le bassin d'aération et le dégazage sous vide.

3. Système selon la revendication 2, caractérisé en ce que l'espace (5) d'aspiration des gaz est relié à la source du vide, qui est avantageusement une pompe d'aspiration.

4. Système selon la revendication 2, caractérisé en ce que les extrémités inférieures du tube collecteur d'alimentation (2) et du tube collecteur d'évacuation (3) sont plongées dans ou reliées avec le conteneur d'aération du mélange de boues activées et le bassin d'épuration secondaire ou avec la chambre séparée (7) du conteneur et la chambre séparée (8) du bassin d'épuration secondaire.

5. Système selon la revendication 2 ou 4, caractérisé en ce que les moyens provoquant le mouvement turbulent comportent une ouverture (6) dans le tube collecteur d'alimentation (2) qui est disposée au-dessus su niveau (a) des eaux usées aérées qui remplissent le bassin des eaux usées à épurer ou sa chambre séparée (7).

6. Système selon la revendication 2 ou 4, caractérisé en ce qu'une pompe d'aspiration et de refoulement est disposée dans le tube collecteur d'alimentation (2).

7. Système selon la revendication 2 ou 4, caractérisé en ce qu'une pompe d'aspiration et de refoulement est disposée dans le tube collecteur d'évacuation (3).
